Europäisches Patentamt

European Patent Office

Office européen des brevets

(11) Publication number: 0 370 758
A1

# (12) EUROPEAN PATENT APPLICATION

(21) Application number: 89312057.6

(22) Date of filing: 21.11.89

(51) Int. Cl.5: C03B 37/14, C03B 37/16

(30) Priority: 22.11.88 US 274556

(43) Date of publication of application:
30.05.90 Bulletin 90/22

(84) Designated Contracting States:
DE FR GB

(71) Applicant: ITT INDUSTRIES INC.
320 Park Avenue
New York, NY 10022(US)

(72) Inventor: Borsuk, Leslie Morton
11622 Kensington Road
Los Alamitos California 90720(US)

(74) Representative: Vaufrouard, John Charles et al
Ruffhead & Vaufrouard Maidstone Road
(STC Site) Foots Cray
Sidcup Kent DA14 5HT(GB)

(54) Optic fibre tapering apparatus and method.

(57) A method and apparatus as described for forming an optic fibre with a narrowly tapered end portion and a smoothly rounded tip. A predetermined tension load is applied to the fibre, a middle portion of the fibre is heated to soften it, and the tension is allowed to rapidly pull the heated middle fibre portion into a narrow taper and then to separate the fibre to form two fibres with narrowly tapered end portions. One of the fibres with a narrowly tapered fibre end portion can be formed with a rounded end by again applying heat, this time to the tip of the tapered end portion. The tension force is applied by a spring, or possibly a weight, to enable rapid acceleration of one fibre end portion away from the other, with the acceleration and speed limited primarily by the heat applied to the fibre.

## OPTIC FIBRE TAPERING APPARATUS AND METHOD

This invention relates to apparatus and a method for tapering the ends of optical fibres to provide rounded end tips.

An end of an optic fibre can be effectively coupled to another optical device by forming a rounded end or lens at the tip of the fibre. In many applications, a fibre tip must pick up light from a small source such as a light emitting diode or laser which emits a spreading beam. The fibre end can more effectively pick up light by tapering the optic fibre core so its receiving NA (numerical aperture), which is related to the taper angle, is enhanced.

One way to taper the end of an optic fibre, described in U.S. Patent 4,589,897 by Mathyssek, involves clamping upper and lower fibre locations, heating a middle portion of the fibre between the locations, and moving up the upper fibre location at a predetermined speed to gradually stretch the fibre. Heating continues as the fibre stretches, and the stretching results in the fibre forming two tapers at the heated middle portion joined by a constriction. When the constriction is formed the upper and lower fibre locations cease to be moved apart but heating continues, and surface tension separates the fibre at the constriction into separate upper and lower fibres. The heating continues after the upper and lower fibres have parted, to cause the ends of the upper and lower fibres to become smoothly rounded to thereby form lenses at the tips of the tapered fibre ends. The equipment for moving the upper fibre location at a controlled speed is fairly expensive, and it is found difficult to form stretched fibre portion with a small taper angle. An apparatus and method which were of low cost to facilitate in-field use, and which enabled the forming of fibre ends with a range of taper angles including narrow tapers, would be of considerable value.

In accordance with one aspect of the present invention, a relatively simple and reliable method is provided for forming a controlled taper coupling end on an optic fibre, characterised in that a predetermined tension is applied to a middle fibre portion that lies between first and second fibre locations, the middle fibre portion is heated, and a predetermined tension continues to be applied as the first and second fibre locations move apart and the middle fibre portion stretches, until the fibre separates. The separation results in two fibres with tapered ends. The tip of a tapered end is rounded to form a lens, by applying a pulse of heat to the tip.

The predetermined tension applied during movement of a fibre location, is applied through a preloaded spring or a weight applied to one of the fibre locations. That fibre location is therefore able to accelerate rapidly away from the other fiber location, at whatever rate that it can accelerate under the tensioning force, as a result of heating of the fibre middle portion. The heating source initially applied to the middle portion of the fibre, applies sufficient heat in a pulse that lasts less than one second, and preferably less than one-half second, to allow rapid separation of the fibre middle portion and its subsequent rapid cooling, to minimise sideward deflection of the tapered end portion.

In accordance with another aspect of the present invention there is provided apparatus for forming an optical fibre with a tapered end portion, characterised by upper and lower clamps which clamp to upper and lower locations along the fibre, one of the clamps being moveable away from the other clamp by a fibre heating device located to heat a middle portion of the fibre that lies between the upper and lower locations and by tensioning means coupled to at least one of the clamps for applying a predetermined tension to the fibre to urge the upper and lower fibre locations apart to thereby stretch the middle fibre portion, the tensioning means being constructed to move the fibre locations apart with an acceleration and speed dependent substantially only on the rate at which the middle fibre location can stretch under the predetermined tension applied by the tensioning means.

The aspects of the invention will be better understood from the following description of one embodiment of apparatus for carrying out a method of optic fibre tapering when read in conjunction with the accompanying drawings in which:

Figure 1 is a partial side elevation view of a fibre tapering apparatus, shown in the course of a tapering operation;

Figure 2 is a view of a tapered end portion of an optical fibre produced by the apparatus of Figure 1, during a later stage of the tapering process;

Figure 3 is a perspective view of the entire apparatus shown in Figure 1; and,

Figure 4 is a plan view of a clamp of the apparatus of Figure 1.

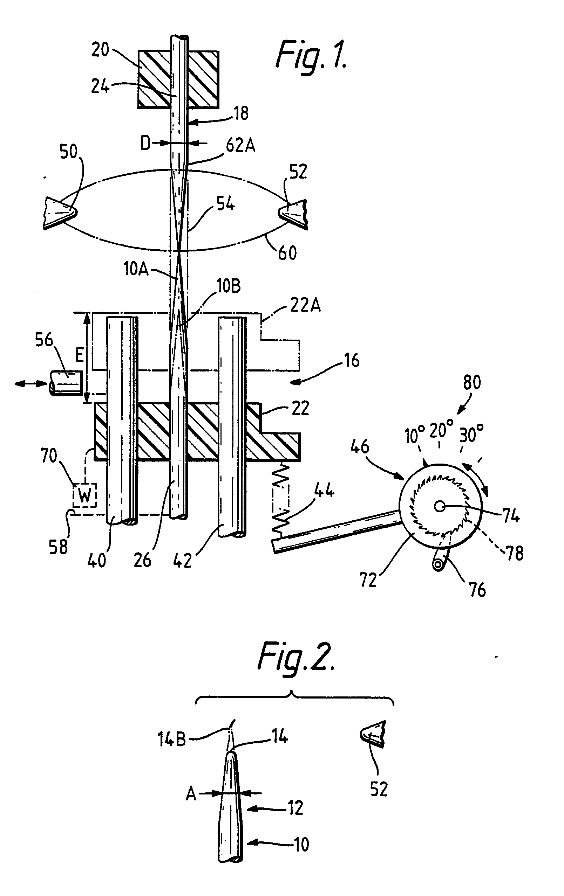

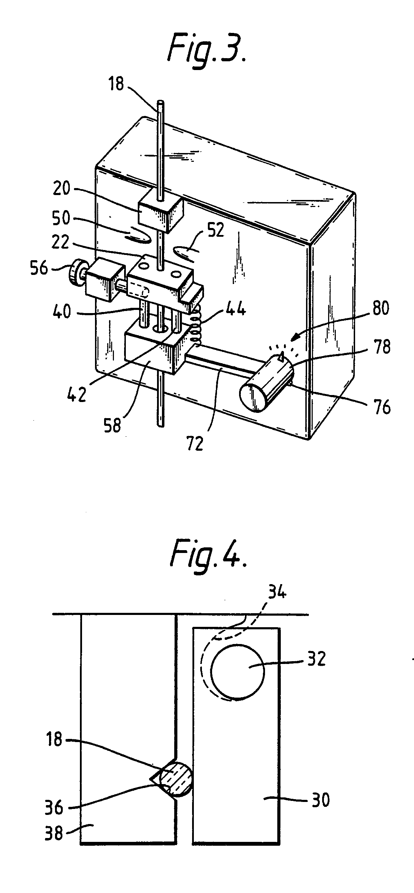

Figure 2 illustrates an optic fibre 10 whose end portion 12 has been formed to efficiently couple to a small diameter light source. The end portion is tapered at a small angle A which matches the angle of a beam emitted from the light source, and has a rounded tip 14 for passing light into the fibre. Figure 1 illustrates an apparatus 16 for forming the properly shaped end portion on an optic fibre 18. The apparatus includes upper and lower clamps 20, 22 (which are preferably but not necessarily vertically spaced) which clamp to upper and lower locations 24,26 along the fibre. Figure 4 is an example of one of such clamps, which includes a block 30 that can swing about an axis 32 under the force of a spring indicated at 34, to press the fibre 18 into a groove 36 in another block 38.

In the apparatus of Figure 1, the upper clamp 20 is held stationary, while the lower clamp 22 is slidable vertically on a pair of vertical guides 40, 42. A spring 44 extends from the lower clamp to a spring loading mechanism 46 which holds down the lower end of the spring to preload the spring. A pair of electrodes 50, 52 lie on opposite sides of a middle portion 54 of the optic fibre 18, the middle fibre portion lying between the upper and lower locations 24, 26 along the fibre. The lower, vertically-slidable clamp 22, is initially in an upper position 22A. A stop 56 can be slid under the lower clamp in the raised position of the clamp, to hold the clamp in position when the fibre is originally mounted, the stop then being removed from under the lower clamp.

With the fibre 18 clamped in the apparatus and the spring 44 preloaded to urge the lower clamp downwardly, an arc indicated at 60 is established between the electrodes 50, 52 to heat the middle portion 54 of the fibre. The heat softens the fibre middle portion and allows it to be stretched under the tension force applied primarily by the spring 44, which is slightly enhanced by the weight of the lower clamp 22 and the portion of the fibre it supports. The lower clamp 22 is slidable along a sufficient distance before it encounters a lower stop 58 that limits separation of the clamps, to allow the fibre middle portion to be stretched till it separates into two separate fibres. The solid lines of Figure 1 illustrate the original fiber 18 at the time it is full stretched, at which time it parts to form two separate fibres 10A, 62A. The lower fibre continues to move down to the position 10B, or to an even lower position, where it is clearly separate from the upper fibre 62A.

In one particular situation, only the lower fibre at 10B is used, with the other one 62A being discarded. The lower fibre 10B must be finished by rounding its tip. This is accomplished by raising the clamp 22 to a position at 22A or a slightly different height, and again establishing the arc 60. As indicated in Figure 2, the arc then melts the extreme tip 14B on the fibre to form a rounded tip at 14. This produces the completed optic fibre end which has a desired taper angle A and rounded tip 14.

The optic fibre 18 (Figure 1) has a small diameter D such as five-thousandths inch, and the lower clamp moves only a small distance E down from it uppermost position before the upper and lower fibres 62A, 10A separate. While the distance of movement E is small, the manner in which this movement is conducted is important in obtaining a controlled taper angel A, especially for small taper angles such as those less than about 20°. Attempting to move one of the clamps at a predetermined speed involves the expense of a gear motor drive and is not satisfactory for small taper angles. A low speed results in the tip deforming in an uncontrolled manner as the tip becomes the hottest and therefore most fluid portion, while a fast speed can result in premature parting. According to the invention a predetermined tension is applied to the fibre, and the clamp is allowed to accelerate at a rate controlled by the tension and degree of fibre softening by the heat. This approach results in continuous pulling of the softened middle fibre portion and its relatively uniform tapering even for small angles of taper. Furthermore, applying a predetermined tension can be accomplished with uniformity so that the taper angle of the fibre end portion is easily repeated. The use of a spring 44 to apply most of the tension, enables rapid downward acceleration of the clamp 22 and lower fiber 10A. It is possible to instead apply a weight indicated at 70, although the acceleration of a weight is more limited than that of a spring.

The spring loading mechanism 46 includes a spring holder 72 which is rotatable about an axis 74, and which is held in any of numerable rotatable positions by a pawl 76 that engages a ratchet wheel 78 on the rotatable member. At different rotatable positions of the member 72, the spring 44 is preloaded in different amounts to apply different tensions to the fibre. A dial 80 indicates the taper angle achieved at different tensions, this being determined by tests.

Apparatus of the type illustrated has been constructed and tested to form tapered ends on 125 micron, or five-thousandth inch, diameter optic fibres. Electrodes 50, 52 were spaced about 75 thousandths inch apart (about 2 millimetres apart), and a high frequency arc lasting about 0.2 seconds and carrying a current of about 40 milliamperes was applied to heat the fibre. The spring 44 was preloaded to about 7 ounces (about one-half pound). It was found that narrow taper angles were uniformly produced. By varying only spring preload, applicant was able to adjust the taper angle and obtain repeatable results using a relatively simple. reliable, and low cost apparatus. The most commonly used optic fibres have a diameter no more than about ten thousandth inch, and it is preferable that sufficient heat for separating be applied during a period of less than a second and preferably less than a half-second, to avoid uncontrolled deformation of a narrowly tapered middle fibre portion.

Thus, the invention provides a method for forming an optical fibre with a tapered end portion, which employs an apparatus of simple construction and operation and enables obtaining narrow taper angles. A predetermined tension is applied to the fibre, and a middle portion of the fibre is rapidly heated. The tension continues to be applied to stretch the fibre and separate it into two fibres with tapered ends. Only after the fibre is separated into two new fibres, is the end of one of the new fibres heated to form a rounded tip. The tension is a predetermined amount that is preferable applied by a spring, although it can also be applied by a weight.

Although a particular embodiment of the invention has been specifically described and illustrated herein, it should be understood that modifications and variations may readily occur to those skilled in the art and consequently it is intended to cover such modifications and equivalents.

## Claims

1. Apparatus for forming an optical fibre with a tapered end portion, characterised by upper and lower clamps (20,22) which clamp to upper and lower locations (24,26) along the fibre (18), one of the clamps (22) being moveable away from the other clamp (20) by a fibre heating device (50,52) located to heat a middle portion (54) of the fibre that lies between the upper and lower locations and by tensioning means (44,46,70) coupled to at least one of the clamps (22) for applying a predetermined tension to the fibre (18) to urge the upper and lower fibre locations (24,26) apart to thereby stretch the middle fibre portion, (54) the tensioning means (44,46,70) being constructed to move the fibre locations (24,26) apart with an acceleration and speed dependent substantially only on the rate at which the middle fibre location (54) can stretch under the predetermined tension applied by the tensioning means (44,46,70).

2. Apparatus as claimed in claim 1, characterised by stop means (58) for limiting the separation of the upper and lower clamps (20,22), to a distance great enough to allow the middle fibre portion (54) to separate into two unconnected ends (10A,62A) under the heat of the heating device (50,52) and the predetermined tension.

3. Apparatus as claimed in claim 1 or claim 2, characterised in that the tensioning means comprises a spring holder (46) and a spring (44) extending between the spring holder (44) and a first of the clamps (22) and biasing the first clamp away from the other clamp (20).

4. Apparatus as claimed in any preceding claim, characterised in that the tensioning means comprises a weight (70) attached to the lower clamp (22).

5. Apparatus as claimed in any preceding claim, characterised in that the tensioning means (44,46), is adjustable for adjusting the tension applied to the fibre (18).

6. Apparatus for forming a tapered coupling end portion in an optical fibre, characterised by upper and lower clamps (20,22), which can clamp to spaced locations (24,26) on the optical fibre (18), a first of the clamps (22) being movable directly away from the other clamp (20), by means for rapidly heating a fibre locations (54) between the clamps (20,22) and by a spring (44) coupled to the first clamp (22) and urging it away from the other clamp (20).

7. Apparatus as claimed in claim 6, characterised by means (46) for adjusting the tension in the spring (44).

8. A method for forming a tapered coupling end portion in an optical fibre, characterised by applying a predetermined tension to a middle fibre portion (54) lying between first and second fibre locations (24,26), by heating the middle portion (54), and by moving the first and second fibre locations (24,26) apart, including continuing to apply the tension while the fibre locations (24,26) move apart until the middle portion (54) separates.

9. The method as claimed in claim 8, characterised in that the step of applying tension includes applying first and second clamps (20,22) respectively to the first and second fibre locations (24,26) and applying a preloaded spring (44) to a first of clamps (22) where the spring (44) has been preloaded to urge the first clamp (22) away from the second clamp (20) and in that the step of moving includes allowing the first clamp (22) to move substantially solely under the force of the spring (44) and the force of gravity on the clamp (22) and any parts that move with it.

10. The method as claim in claim 8, characterised in that the step of applying tension includes applying upper and lower clamps (20,22) respectively to the first and second fibre locations (24,26), with the lower clamp (22) being free to move down, and applying a predetermined weight (70) to the lower clamp (22) and in that the step of moving includes allowing the lower clamp (22) to move down substantially solely under the force of gravity on the clamp (22) and weight (70).

11. The method as claimed in claim 8, characterised in that the steps of heating and moving include heating the middle fibre portion (54) sufficiently and applying sufficient tension to allow the fibre middle portion (54) to separate and in that the step of moving includes continuing to move the fibre locations (24,26) apart until the fibre (18) separates into two separate fibres (10A,62A).

12. The method as claimed in claim 8, characterised in that the step of heating includes applying a pulse of an arcing current between a pair of electrodes (50,52) located on opposite sides of the fibre middle portion (54) and including after the fibre (18) separates into two separate fibres (10A,62A) moving the end of one of the fibres (10A) between the electrodes (50,52) and applying a second arcing current between the electrodes.

13. The method as claimed in claim 8, characterised in that the fibre (18) has a diameter of about 5 thousandths inch, in that the step of heating includes applying a current on the order of 40 milliamperes for a period of no more than about one-half second between a pair of electrodes (50,52) spaced about 2 millimetres apart with the fibre (18) between them and in that the step of applying tension includes applying a tension of about one-half pound to the fibre.

14. A method for forming a tapered coupling end portion in an optical fibre, characterised by clamping upper and lower fibre locations (24,26) to upper and lower clamps (20,22), where a first of the clamps (22) is moveable in a predetermined vertical direction away from the other clamp (20), by applying a predetermined force to the first clamp (22) urging it in the predetermined direction; by heating a middle portion (54) of the fibre (18) which lies between the clamps (20,22), sufficiently to allow the fibre to separate when stretched by the predetermined force and by continuing to apply the force to the clamp after the beginning of the step of heating, until the middle fibre portion (54) is pulled apart into two separate fibres (10A,62A).

15. The method as claimed in claim 14, characterised in that the step of heating includes applying an arc (60) in a pulse between a pair of electrodes (50,52), and by, after the fibre is pulled apart, moving the end of one of fibres (10A) to a location between the electrodes (50,52), and again applying an arc pulse between the electrodes.

16. The method as claimed in claim 14, characterised in that the step of applying a force includes preloading a spring (44) attached to the first clamp (22), to apply a spring force to the clamp urging it in the predetermined direction.

Fig.1.

Fig.2.

# Fig.3.

18

20

50

22

56

40

52

44

42

80

78

76

58

72

# Fig.4.

34

32

18

36

38

30

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 407 820 (SIEMENS AG) * Claims 1,2; figure 1 * | 8 | C 03 B 37/14 C 03 B 37/16 |
| X | FR-A-2 548 391 (CGE SA) * Figures 5-7 * | 8 | |
| A | EP-A-0 137 312 (SIEMENS AG) * Claim 9; fig. * | 1,8,14 | |
| X | FR-A-2 538 566 (INT. STANDARD ELECTRIC CORP.) * Claim 4; figure 2A * | 8 | |
| X | PATENT ABSTRACTS OF JAPAN, vol. 8, no. 33 (P-254)[1470], 14th February 1984; & JP-A-58 189 601 (FURUKAWA DENKI KOGYO K.K.) 05-11-1983 * English abstract and figures 1,2a-2c * | 6 | |
| D,A | US-A-4 589 897 (K. MATHYSSEK et al.) | 1,8 | TECHNICAL FIELDS SEARCHED (Int. Cl.5) C 03 B 37/15 C 03 B 37/16 G 02 B |

The present search report has been drawn up for all claims

| Place of search | Date of completion of the search | Examiner |
|---|---|---|
| THE HAGUE | 20-02-1990 | STROUD J.G. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document